## Europäisches Patentamt
## European Patent Office
## Office européen des brevets

(19)

(11) Veröffentlichungsnummer: **0 238 437**
**B1**

(12) **EUROPÄISCHE PATENTSCHRIFT**

(45) Veröffentlichungstag der Patentschrift:
**18.07.90**

(51) Int. Cl.⁵: **A21B 3/13**

(21) Anmeldenummer: **87730018.6**

(22) Anmeldetag: **17.02.87**

(54) **Backblech.**

(30) Priorität: **18.02.86  DE 8604244 U**

(43) Veröffentlichungstag der Anmeldung:
**23.09.87 Patentblatt 87/39**

(45) Bekanntmachung des Hinweises auf die Patenterteilung:
**18.07.90 Patentblatt 90/29**

(84) Benannte Vertragsstaaten:
**AT BE CH DE FR IT LI LU NL SE**

(56) Entgegenhaltungen:
**FR-A- 980 609**
**US-A- 1 553 704**
**US-A- 2 570 524**
**US-A- 2 627 801**

(73) Patentinhaber: **H. Zenker GmbH + Co. KG,**
**Industriegelände Nord, D-8890 Aichach(DE)**

(72) Erfinder: **Zenker, Hermann, Oberbernbacher Weg 2,**
**D-8890 Aichach(DE)**

(74) Vertreter: **Ninnemann, Detlef, Dipl.-Ing., Patentanwälte**
**Maikowski & Ninnemann Xantener Strasse 10,**
**D-1000 Berlin 15(DE)**

## Beschreibung

Die Erfindung betrifft ein Backblech mit zwei in einer Richtung zueinander verschiebbaren Backblechteilen, die eine im wesentlichen rechteckförmige Bodenplatte, einen seitlich umlaufenden, hochgezogenen Rand aufweisen und deren gegenüberliegende, sich in Verschiebungsrichtung erstreckende Seitenränder ineinandergreifen.

Aus der FR-A 980 609 ist eine kastenförmige Kuchenform bekannt, die aus zwei unterschiedlich langen Teilen zusammmengesetzt ist, deren Längenabmessungen durch eine Verschiebung der ineinander geführten Teile über einen größeren Bereich veränderbar ist. Zur Verschiebung der beiden Teile gleitet der kleinere Teil der Kuchenform auf dem größeren Teil. Dabei liegen die Seitenränder sowie die Bodenplatte des kleineren Teils an den Außenflächen der Seitenränder bzw. der Bodenplatte des größeren Teils an, wobei der den oberen Rand des größeren Teils bildende Falz den Seitenrand des kleinern Teils umgreift. Zur besseren Führung der beiden ineinander verschiebbaren Teile weist der kleinere Teil zwei aus dem Seitenrand hervorragende Drahtenden auf, die in dem Seitenrand des größeren Teils längs verschiebbar geführt sind.

Die Verschiebbarkeit der beiden Teile der bekannten zweiteiligen Kuchenform dient ausschließlich dem Zweck, Kuchen unterschiedlicher Länge backen zu können, wobei die gewünschte Länge durch eine Verschiebung der beiden Kuchenformteile zueinander im Rahmen der ineinandergreifenden Teile beider Kuchenformteile einstellbar ist. Die geringe Überlappung der beiden Kuchenformteile in einem mittleren Längenbereich der Kuchenform bedingt eine relativ geringe Formstabilität, die es nicht ermöglicht, die mit Teig gefüllte Kuchenform lediglich an zwei gegenüberliegenden Seitenrändern abzustützen. Die Folge hiervon wäre ein Auseinandergleiten der Kuchenformteile, so daß es erforderlich ist, die Kuchenform während des Backvorganges auf einem Ofenrost oder einem Backblech abzustellen, so daß die Kuchenform mit ihrer gesamten Bodenfläche von dem Ofenrost bzw. Backblech abgestützt wird.

Aus der US-A 1 553 704 sind Backbleche und Kuchenformen bekannt, die ebenfalls aus zwei ineinander verschiebbaren Teilen zusammengesetzt sind, so daß die Backbleche bzw. Kuchenformen länger oder kürzer gemacht werden können, um unterschiedlich große Backwaren herstellen zu können. Auch diese längenveränderlichen Backbleche und Kuchenformen dienen dem ausschließlichen Zweck, unterschiedliche Backblechgrößen und Kuchenformgrößen für unterschiedliche Größen der herzustellenden Backwaren zu vermeiden.

Der Boden der bekannten Backbleche und Kuchenformen weist eine in Längsrichtung verlaufende Sicke auf, die zur teilweisen Aufnahme einer Klammer dient, die die stirnseitigen Wandungen der Backbleche und Kuchenformen umfaßt und so die Backbleche und Kuchenformen in ihrer Länge arretiert. Da die Backbleche und Kuchenformen keine Eigenstabilität aufweisen, sind geeignete Unterlagen zur Abstützung der Backbleche und Kuchenformen erforderlich.

Aus der US-A 2 627 801 ist eine als Kastenform gestaltete Kuchenform bekannt, deren zwei im wesentlichen gleichlang ausgeführte Teile ineinander verschiebbar sind. Um die relative Verschiebung der Teile gegeneinander zu sichern, sind in der Bodenwandung der Teile Prägungen vorgesehen, die bei einer Relativverschiebung ineinander einrasten.

Aus der DE-A 3 446 582 ist ein Backblech bekannt, das an seinem Seitenrand einen ausziehbaren, sich über die gesamte Länge des Seitenrandes erstreckenden U-förmigen Bügel aufweist. Dieser Bügel dient der zusätzlichen Führung und Abstützung des Backblechs in Längsführungen eines Backofeninnenraums und ermöglicht es, das Backblech soweit aus dem Backofen nach vorne herauszuziehen, daß eine ganzflächige Zugänglichkeit des Backbleches außerhalb des Backofens gegeben ist. In der herausgezogenen Stellung des Backblechs erfolgt die Abstützung ausschließlich über den mit dem Backblech verbundenen ausziehbaren Bügel. Bei ausgezogenem Bügel vergrößert sich zwar die Gesamtfläche des Backblechs, jedoch ist hiermit keine Vergrößerung der für den Backvorgang nutzbaren, von dem erhöhten Backblechrand umgrenzten Fläche gegeben, so daß das Backblech eine gleichbleibende Backfläche zur Aufnahme von Backgut aufweist.

Aufgabe der vorliegenden Erfindung ist es, ein Backblech zu schaffen, dessen Backfläche an unterschiedliche Backofengrößen anpassbar ist und eine große Eigenstabilität aufweist, so daß es ohne Unterlage in die Nuten eines Backofens einsetzbar ist und auch bei stärkerer Belastung und Hitzeeinwirkung seine eingestellte Länge nicht verändert.

Diese Aufgabe wird dadurch gelöst, daß das zweite Backblechteil etwa doppelt so lang wie das erste Backblechteil und innerhalb des ersten Backblechteiles verschiebbar ist, daß die Höhe der Seitenränder und der Stirnseiten der Backblechteile gering gegenüber den Abmessungen der Bodenplatten ist, daß die Stirnseiten der Backblechteile im wesentlichen rechtwinklig von den Bodenplatten der Backblechteile abgewinkelt sind und in einen waagerechten, parallel zu den Bodenplatten auslaufenden Teil übergehen, der in vorgefertigte Nuten unterschiedlich breiter Backherdeinschübe einschiebbar ist, und daß die Backblechteile mittels einer Raststufen aufweisenden Klemmvorrichtung gegeneinander verriegelbar sind.

Die erfindungsgemäße Lösung ermöglicht es, ein Backblech in den Nuten unterschiedlich großer Backöfen einzusetzen, so daß das Backblech für unterschiedlich breite Backöfen geeignet ist und dabei gleichzeitig die für den betreffenden Ofen maximale Backfläche zur Aufnahme von Backgut sicherstellt.

Die ineinander verschiebbaren Backblechteile sind bezüglich ihrer Dimensionierung und der Ausgestaltung ihrer Seiten- und Stirnränder unter Einbeziehung einer Klemmvorrichtung so konfiguriert, daß sie eine optimale Eigenstabilität aufweisen und somit ohne Unterlage in die Nuten eines Backofens einsetzbar sind. Auch bei stärkerer Belastung und Hitzeeinwirkung verändert das längenveränderliche Backblech seine eingestellte Länge nicht.

Anhand eines in der Zeichnung dargestellten Ausführungsbeispieles soll der der Erfindung zugrundeliegende Gedanke näher erläutert werden. Es zeigen:

Fig. 1 eine Draufsicht auf ein ausziehbares bzw. längenveränderliches Backblech;

Fig. 2 einen Schnitt durch das längenveränderliche Backblech entlang der Linie A–A gemäß Fig. 1;

Fig. 3 einen Schnitt durch das längenveränderliche Backblech gemäß Fig. 1 entlang der Linie B–B und

Fig. 4 eine detaillierte Darstellung eines Ausführungsbeispieles der Seitenränder des längenveränderlichen bzw. ausziehbaren Backbleches gemäß Fig.1.

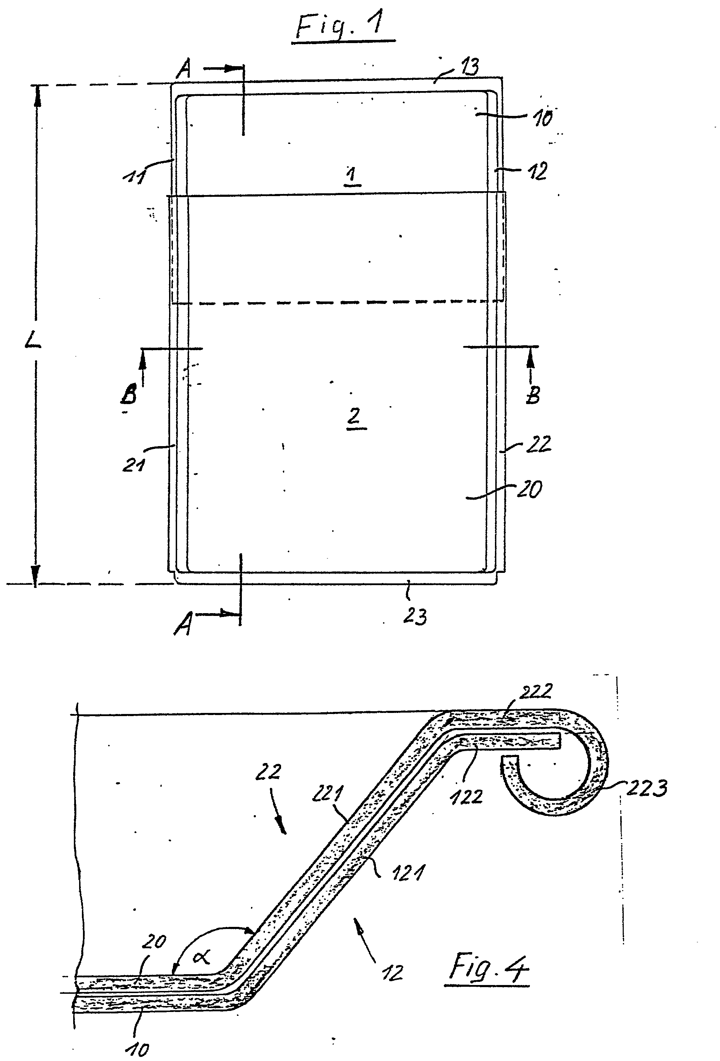

Das in Fig. 1 in der Draufsicht dargestellte ausziehbare Backblech besteht aus zwei Backblechteilen 1, 2 mit im wesentlichen rechteckförmiger Bodenplatte 10, 20, die auf drei Seiten mit hochgezogenen Seitenrändern 11, 12 bzw. 21, 22 und jeweils einem Stirnrand 13, 23 versehen ist.

Die einzelnen Backblechteile 1, 2 sind ineinander verschiebbar, so daß sich eine unterschiedliche Gesamtlänge L des Backbleches ergibt, die den individuellen Bedürfnissen anpaßbar ist.

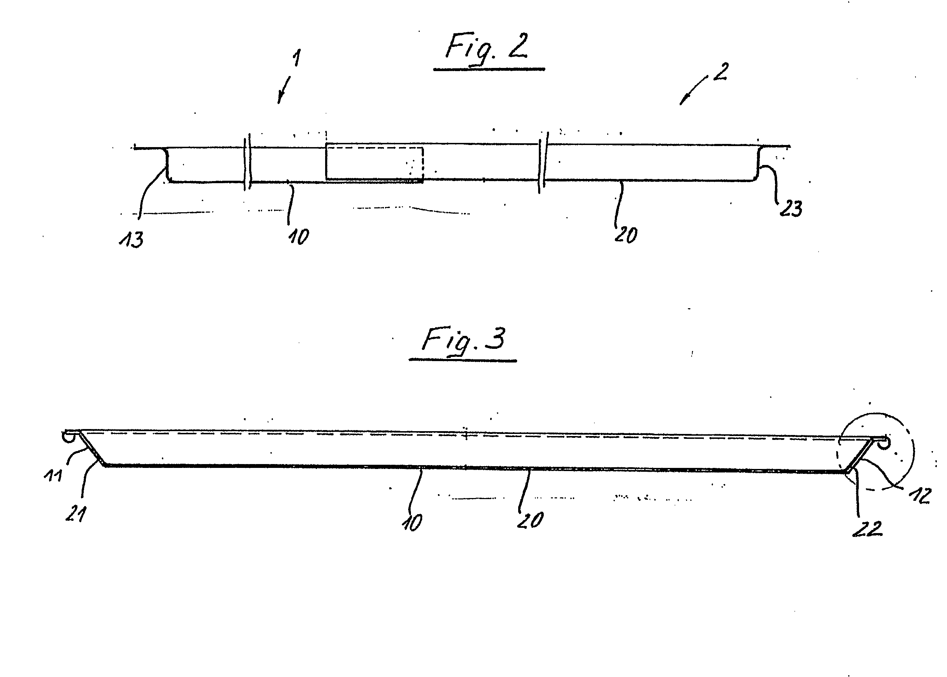

Der in Fig. 2 dargestellte Längsschnitt entlang der Linie A–A des Backbleches gemäß Fig. 1 verdeutlicht das Ineinandergreifen der beiden Backblechteile 1, 2, wobei das erste Backblechteil 1 etwa halb so lang ist wie das zweite Backblechteil 2, das innerhalb des ersten Backblechteiles 1 verläuft.

Die Stirnseiten 13, 23 der beiden Backblechteile 1, 2 sind in etwa rechtwinklig von der Bodenplatte 10, 20 abgewinkelt und laufen in einen waagerechten, parallel zur Bodenplatte 10, 20 auslaufenden Teil aus. Diese Stirnseiten sind beispielsweise in die vorgefertigten Nuten eines Backherdes einschiebbar, so daß sich das erfindungsgemäße Backblech für unterschiedlich breite Backherde eignet.

Der in Fig. 3 dargestellte Schnitt durch das zweiteilige Backblech entlang der Linie B–B gemäß Fig. 1 sowie die in Fig. 4 vergrößert dargestellte detaillierte Konstruktion der ineinandergreifenden Seitenränder der beiden Backblechteile 1, 2 verdeutlichen die erfindungsgemäße Konstruktion zur Längenveränderung des Backbleches.

Die beiden Seitenränder des ersten Backblechteiles 1 weisen in dem dargestellten Ausführungsbeispiel einen ersten Abschnitt 12 auf, der unter einem stumpfen Winkel von beispielsweise 125° gegenüber der Bodenplatte abgewinkelt ist. An den ersten Abschnitt 121 schließt sich ein nach außen weisender zweiter Abschnitt 122 an, der im wesentlichen parallel zur Bodenplatte 10 verläuft.

Das in das erste Backblechteil eingeschobene zweite Backblechteil 2 weist Seitenränder 21 bzw. 22 auf, die einen ersten Abschnitt 221 enthalten, der im wesentlichen parallel zum ersten Abschnitt 121 des ersten Backblechteiles 1 verläuft. An diesen ersten Abschnitt 221 schließt sich ein ebenfalls parallel zum zweiten Abschnitt 122 des ersten Backblechteiles 1 verlaufender waagerechter, zweiter Abschnitt 222 an. Ein dritter Abschnitt 223 des zweiten Backblechteiles 2 ist um das Ende des zweiten Abschnittes 122 des ersten Backblechteiles 1 gebogen, wobei vorzugsweise der Biegeradius konstant ist, so daß der dritte Abschnitt 223 des zweiten Backblechteiles 2 nach Art eines geschlitzten Zylinders ausgebildet ist.

Selbstverständlich sind auch andere Führungsmechanismen möglich, um beide Backblechteile ineinander verschiebbar zu gestalten.

Die beiden Backblechteile 1, 2 des dargestellten Ausführungsbeispieles sind so dimensioniert, daß sie zumindest in dem verschiebbaren Teil mit geringem Spiel zueinander passen, so daß sie in jeder Stellung ein festes Gebilde ergeben. Zusätzlich kann eine Klemmvorrichtung vorgesehen werden, beispielsweise durch Anordnung einer Blattfeder, so daß eine zusätzliche Arretierung gegeben ist.

Eine weitere Variante kann darin bestehen, die Klemmvorrichtung mit Raststufen zu versehen, so daß die Längenveränderung des Backbleches in bestimmten Stufen, die beispielsweise den unterschiedlichen Backherdgrößen angepaßt sind, erfolgen kann.

Obwohl das vorstehend beschriebene Ausführungsbeispiel auf zwei Backblechteile ausgerichtet ist, liegt es selbstverständlich im Rahmen der vorliegenden Erfindung, das Backblech auch aus mehr als zwei Backblechteilen zusammenzusetzen, je nach Anwendungszweck und -bedarf.

**Patentansprüche**

1. Backblech mit zwei in einer Richtung zueinander verschiebbaren Backblechteilen (1, 2), die eine im wesentlichen rechteckförmige Bodenplatte (10, 20) und einen seitlich umlaufenden, hochgezogenen Rand (11, 12, 13; 21, 22, 23) aufweisen und deren gegenüberliegende, sich in Verschiebungsrichtung erstreckende Seitenränder (11, 12; 21, 22) ineinandergreifen, dadurch gekennzeichnet daß das zweite Backblechteil (2) etwa doppelt so lang wie das erste Backblechteil (1) und innerhalb des ersten Backblechteiles (1) verschiebbar ist, daß die Höhe der Seitenränder (11, 12; 21, 22) und der Stirnseiten (13; 23) der Backblechteile (1, 2) gering gegenüber den Abmessungen der Bodenplatten (10, 20) ist, daß die Stirnseiten (13; 23) der Backblechteile (1, 2) im wesentlichen rechtwinklig von den Bodenplatten (10; 20) der Backblechteile (1, 2) abgewinkelt sind und in einen waagerechten, parallel zu den Bodenplatten (10, 20) auslaufenden Teil übergehen, der in vorgefertigte Nuten unterschiedlich breiter Backherdeinschübe einschiebbar ist, und daß die Backblechteile (1, 2) mittels einer Raststufen aufweisenden Klemmvorrichtung gegeneinander verriegelbar sind.

2. Backblech nach Anspruch 1, dadurch gekennzeichnet, daß die Seitenränder (11, 12) des ersten Backblechteils (1) einen unter einem stumpfen Winkel (α) gegenüber der Bodenplatte (10) abgewinkelten ersten Abschnitt (121) und einen sich daran anschließenden waagerechten, nach außen abstehenden Abschnitt (122) aufweisen und daß die Seitenränder (21, 22) des zweiten Backblechteiles (2) einen parallel zum abgewinkelten ersten Abschnitt (121) des ersten Backblechteiles (1) verlaufenden ersten Abschnitt (221), einen parallel zum waagerechten zweiten Abschnitt (122) des ersten Backblechteiles (1) verlaufenden zweiten Abschnitt (222) und einen das Ende des zweiten Abschnittes (122) der Seitenränder (11, 12) des ersten Backblechteiles (1) umgreifenden dritten Abschnitt (223) aufweisen.

3. Backblech nach Anspruch 2, dadurch gekennzeichnet, daß der dritte Abschnitt (223) des zweiten Backblechteiles (2) nach Art eines geschlitzten Zylinders um den zweiten Abschnitt (122) des ersten Backblechteiles (1) gebogen ist.

## Claims

1. Baking tray having two baking tray sections (1, 2) which are displaceable in one direction relative to each other, which have a substantially rectangular base plate (10, 20) and a circumferential, lateral grown-up edge (11, 12, 13; 21, 22, 23) and the opposing lateral edges (11, 12; 21, 22) of which, extending in the direction of displacement, engage in each other, characterised in that the second baking tray section (2) is approximately twice as long as the first baking tray section (1) and is displaceable inside the first baking tray section (1), that the height of the lateral edges (11, 12; 21, 22) and the ends (13; 23) of the baking tray sections (1, 2) is small compared with the dimensions of the base plates (10, 20), that the ends (13; 23) of the baking tray sections (1, 2) are bent substantially at a right-angle to the base plates (10; 20) of the baking tray sections (1, 2) and merge into a horizontal section which runs parallel to the base plates (10, 20), which section can be pushed into prefabricated grooves of oven inserts of different widths, and that the baking tray sections (1, 2) can be locked against each other by means of a clamping device having locking steps.

2. Baking tray according to Claim 1, characterised in that the lateral edges (11, 12) of the first baking tray section (1) have a first section (121) which is bent at an obtuse angle (α) relative to the base plate (10) and a horizontal section (122) projecting outwards adjacent thereto, and that the lateral edges (21, 22) of the second baking tray section (2) have a first section (221) running parallel to the bent first section (121) of the first baking tray section (1), a second section (222) running parallel to the horizontal second section (122) of the first baking tray section (1) and a third section (223) surrounding the end of the second section (122) of the lateral edges (11, 12) of the first baking tray section (1).

3. Baking tray according to Claim 2, characterised in that the third section (223) of the second baking tray section (2) is curved about the second section (122) of the first baking tray section (1) in the manner of a slit cylinder.

## Revendications

1. Tôle de cuisson à deux éléments de tôle de cuisson (1, 2) déplaçables dans une direction l'un par rapport à l'autre, qui comportent une plaque de fond (10, 20) sensiblement rectangulaire et un bord relevé latéralement périphérique (11, 12, 13; 21, 22, 23) et dont les bords latéraux opposés (11, 12; 21, 22), s'étendant en direction de déplacement, pénètrent l'un dans l'autre, caractérisée en ce que le second élément de tôle de cuisson (2) est sensiblement deux fois plus long que le premier élément de tôle de cuisson (1) et est déplaçable intérieurement au premier élément de tôle de cuisson (1), en ce que la hauteur des bords latéraux (11, 12; 21, 22) et des côtés frontaux (13; 23) des éléments de tôle de cuisson (1, 2) est faible par rapport aux dimensions des plaques de fond (10, 20), en ce que les faces frontales (13; 23) des éléments de tôle de cuisson (1, 2) sont repliées sensiblement à angle droit depuis les plaques de fond (10; 20) des éléments de tôle de cuisson (1, 2) et se continuent en une portion horizontale, parallèle aux plaques de fond (10, 20), laquelle est insérable dans des rainures préfabriquées de glissières d'insertion de fours de cuisson différemment larges et en ce que les éléments de tôle de cuisson (1, 2) sont verrouillables l'un par rapport à l'autre au moyen d'un dispositif de serrage présentant des crans d'enclenchement.

2. Tôle de cuisson selon la revendication 1, caractérisée en ce que les bords latéraux (11, 12) du premier élément de tôle de cuisson (1) comportent une première portion (121) repliée selon un angle obtus (α) par rapport à la plaque de fond (10) et une portion horizontale saillante vers l'extérieur (122) s'y raccordant et en ce que les bords latéraux (21, 22) du second élément de tôle de cuisson (2) comportent une première portion (221) s'étendant parallèlement à la première portion repliée (121) du premier élément de tôle de cuisson (1), une deuxième portion (222) s'étendant parallèlement à la seconde portion horizontale (122) du premier élément de tôle de cuisson (1) et une troisième portion (223) embrassant l'extrémité de la deuxième portion (122) des bords latéraux (11, 12) du premier élément de tôle de cuisson (1).

3. Tôle de cuisson selon la revendication 2, caractérisée en ce que la troisième portion (223) du second élément de tôle de cuisson (2) est recourbée à la façon d'un cylindre fendu autour de la deuxième portion (122) du premier élément de tôle de cuisson (1).

## Fig. 1

## Fig. 4

Fig. 2

Fig. 3